# EUROPEAN PATENT SPECIFICATION

(11) **EP 4 155 208 B1**
(45) Date of publication and mention of the grant of the patent: **02.09.2026**
(21) Application number: 21199174.0
(22) Date of filing: 27.09.2021
(51) Int. Cl.: B64D 13/06, B64D 13/08, B64D 27/34, B64D 33/08, H01M 10/613, H01M 10/625, H01M 10/6568, H01M 10/6569, H01M 10/48, H01M 10/663, B64D 27/357

(54) **THERMAL MANAGEMENT SYSTEM FOR AN AIRCRAFT**
WÄRMEVERWALTUNGSSYSTEM FÜR EIN FLUGZEUG
SYSTÈME DE GESTION THERMIQUE POUR UN AÉRONEF

(43) Date of publication of application: 29.03.2023
(73) Proprietor: Archer Aviation Inc., San Jose, CA 95134 (US)
(72) Inventor: DIETRICH, Axel, 82234 Wessling (DE); KNEISSL, Stefan, 82234 Wessling (DE); FRITSCH, Gerd, 82234 Wessling (DE)
(74) Representative: Finnegan Europe LLP

(56) References cited:
- EP-A1- 3 800 724
- CN-A- 108 688 803
- DE-A1- 102018 101 514
- US-A1- 2009 249 802
- US-A1- 2020 343 611
- US-A1- 2020 361 279
- US-A1- 2021 213 798
- US-B2- 10 384 511

## Description

The present invention relates to a thermal management system for an aircraft with a cabin and a battery assembly comprising a plurality of battery modules as well as to an aircraft equipped with such a thermal management system.

In particular in electrically propelled aircraft or aircraft which supply other major loads with energy from battery cells, a high-performance thermal management system for the according battery assembly is required in order to be able to handle the heat produced by battery assemblies with high capacity and high peak power output during their operation. Furthermore, cabins in aircraft also require a thermal management system since, especially in designs in which a large percentage of the cabin is covered by glass surfaces, heat will accumulate in the cabin to an extent which would be uncomfortable for passengers and pilots.

In general, such thermal management systems need to be able to fulfill the objectives of providing large cooling capacities through small surfaces in order to enable the extraction of high heat fluxes and to provide uniform cooling to all battery cells provided in the battery modules. Furthermore, finding a lightweight and energy-efficient design for the thermal management system is also of utmost importance for any aircraft in order to be able to achieve efficient operation.

However, especially for high capacity and high power battery systems that are locally distributed within such an aircraft, uniform cooling at high cooling capacities can hardly be achieved with standard battery thermal management systems. Such standard battery thermal management systems cycle a cooling liquid, which absorbs sensible heat and changes its temperature. Such cooling systems, however, require large components with corresponding heavy weight in order to be able to provide the required cooling performance. Furthermore, the temperature change of the cooling liquid complicates the uniform cooling of all battery cells in the battery modules.

Documents US 2009/242802 A1, DE 10 2018 101514 A1 and CN 108688803 A all relate to thermal management systems with a plurality of cooling units.

It is therefore the object of the present invention to provide a high-performance thermal management system for an aircraft with low weight and uniform cooling capabilities for all battery cells in the battery modules of the aircraft.

For this purpose, the system according to the present invention comprises a cooling circuit configured to circulate a two-phase cooling fluid, the cooling circuit in turn comprising a compressor for compressing the cooling fluid in its vapor phase, a condenser unit for condensing the compressed cooling fluid and outputting the cooling fluid in its liquid phase, a cabin cooling unit with a controllable expansion valve and configured to cool the cabin, and a battery cooling unit with at least one controllable expansion valve and configured to cool the plurality of battery modules, as well as a control unit for controlling operation of the compressor and the controllable expansion valves, wherein each of the cabin cooling unit and the battery cooling unit are configured to evaporate the liquid cooling fluid and to output the cooling fluid in its vapor phase.

Thus, by evaporating a two-phase fluid in both a cabin cooling unit and a battery cooling unit, an improved cooling performance can be achieved, since instead of a single-phase fluid drawing on sensible heat, the invention suggests using a two-phase fluid drawing on latent heat, which per volume flow or mass flow is larger than sensible heat. Consequently, the cooling fluid volume flow or mass flow can accordingly be reduced, which in turn allows a reduction of the size of the cooling circuit and the amount of cooling fluid to be carried. This downsizing of relevant components leads to substantial mass savings in the system according to the invention.

Furthermore, during the liquid-vapor phase change of the cooling fluid, its temperature does not change. Consequently, the battery assembly is subjected to a uniform cooling temperature, which in turn results in a very uniform cooling performance. It shall at this point be mentioned that the battery modules each typically consist of a plurality of separate battery cells, which are housed in a battery module housing and are interconnected with one another according to a certain scheme within the module housing.

Also, and in order to be able to suitably control the operation of the compressor and the controllable expansion valves by means of the control unit, the system according to the invention comprises several temperature sensors. In order to suitably control the complete evaporation of the cooling fluid before it enters the compressor, a temperature sensor is positioned downstream of at least one expansion valve in the cooling circuit. One additional temperature sensor per expansion valve is furthermore positioned downstream of the corresponding evaporator unit. If evaporator units which are arranged in parallel share a single expansion valve, the corresponding single temperature sensor is placed downstream of the unification point of the parallel evaporation branches.

The system according to the invention may further comprise at least one temperature sensor unit configured to measure a temperature of the cabin or the battery assembly, wherein preferably each battery module is provided with at least one separate temperature sensor unit. For this purpose, the control unit of the thermal management system may not only be coupled to the respective at least one sensor unit in order to receive its output and control the compressor as well as the controllable expansion valves accordingly, but may furthermore also be coupled to additional data collecting and data processing components of the aircraft. **In** particular, the control unit of the thermal management system may be coupled to a central computing unit of the aircraft or may even be integrated therein.

While it is in principle possible to divert the heat removed from the cabin as well as the battery assembly by means of the condenser unit to the outside of the aircraft, in other embodiments the system according to the present invention may further comprise a heat exchanger to recover the heat produced in the condenser unit for providing heat to other systems of the aircraft, such as a de-icing system for wing tips and/or engines.

According to the present invention, the battery cooling unit is integrated with the battery assembly in such a manner that the evaporation of the liquid cooling fluid takes place inside the housings of the individual battery modules. Thus, the housings of the individual battery modules themselves serve as evaporators and the latent heat for evaporating the cooling fluid is directly provided by the battery cells themselves. Providing such a uniform cooling to each of the battery cells with a fixed evaporation temperature of the cooling fluid may further contribute to reduced aging of the battery cells during operation and thus an increase in the cycle life of the battery cells, which over the lifespan of the aircraft may lead to a substantial reduction of costs.

In particular, the battery cooling unit is provided with a single controllable expansion valve. While this particular design of the system according to the invention eliminates the need for a dedicated evaporator in the battery cooling unit, it nevertheless has to be made sure that only cooling fluid in its vapor phase will reach the compressor.

For this purpose, downstream of the battery modules of the battery cooling unit, a liquid-vapor separator is provided, wherein the liquid-vapor separator is arranged such that cooling fluid in its vapor phase is directed to the compressor, while cooling fluid in its liquid phase is directed to the battery assembly by means of a pump unit. While in this particular design of the system according to the invention providing only a single controllable expansion valve for the entire battery assembly will lead to a reduction of weight and costs of the system, the overheating of the cooling fluid being discharged from the cabin cooling unit has to be controlled to such an amount that in the liquid-vapor separator liquid cooling fluid will evaporate in order to be supplied to the compressor.

Furthermore, the present invention relates to an aircraft, comprising a fuselage with a cabin, a battery assembly comprising a plurality of battery modules and a thermal management system according to the present invention. Said aircraft may in particular be an electrically propelled aircraft, for example with vertical takeoff and landing capabilities, since in such aircraft designs, high electrical power is drawn from the battery assembly especially during takeoff, hovering and landing operations.

The aircraft according to the invention may further comprise at least one additional component to be cooled by the thermal management system, in particular at least one electrical propulsion engine. Said cooling can accordingly be performed with either direct evaporation of the cooling fluid in the vicinity of the component to be cooled or by means of a heat exchanger and a secondary cooling circuit as discussed above.

In a possible design of the aircraft according to the invention, at least some of the battery modules of the battery assembly may be positioned adjacent to the inner walls of the fuselage and the thermal management system may be positioned at the centerline of the aircraft in between the battery modules. Thus, the system can be built relatively compact and extensive piping can be avoided, which leads to a reduced weight and an efficiency increase of the system.

Additional features and advantages of the present invention will become even clearer from the following description of embodiments thereof when taken together with the accompanying drawings. These show in particular:
- Fig. 1: a schematic plan view of the fuselage of an aircraft according to the invention;
- Figs. 2-3B: comparative examples of thermal management systems in a schematic view; and
- Fig. 3C: an embodiment of a thermal management system according to the invention.

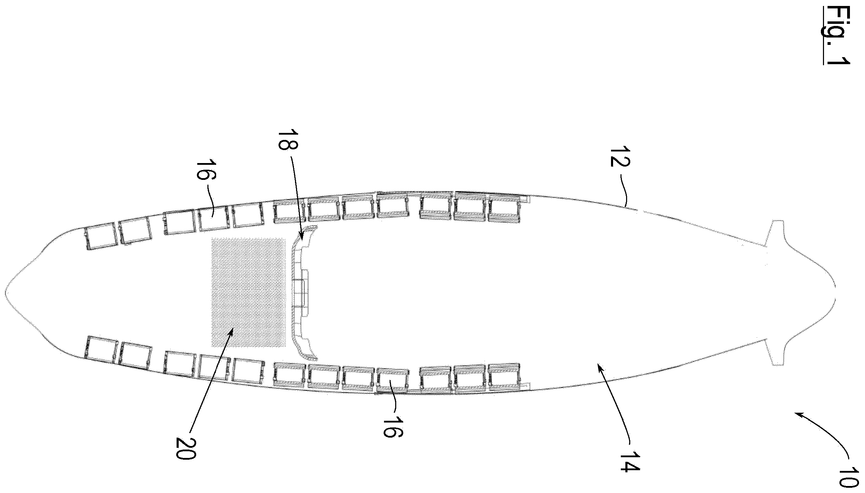

In Fig. 1, the fuselage of an aircraft 10 according to the invention is shown and denoted with reference numeral 12. Herein, the aircraft 10 is shown without its wings, yet comprises a cabin 14 in its front part as well as a number of battery modules 16 positioned adjacent to the inner walls of the fuselage 12 along some of its longitudinal extension.

Said battery modules 16 each consist of a housing in which a plurality of individual battery cells are housed and interconnected. Behind a bulkhead 18 separating the cabin 14 from the rear part of the fuselage 12, some components of a thermal management system 20 according to the invention are positioned, such as the compressor and the condenser unit as will be discussed below.

Said thermal management system 20 is adapted to cool both the cabin 14 and the battery modules 16, wherein all of the battery modules 16 in total form the battery assembly of the aircraft 10.

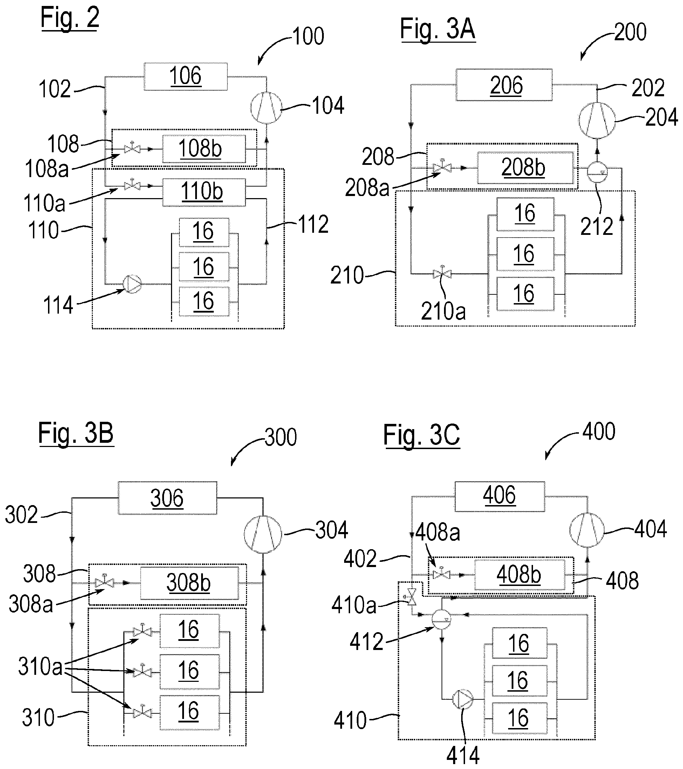

Fig. 2 schematically shows a first comparative example of a thermal management system, which may serve as the thermal management system 20 in the aircraft 10 of Fig. 1.

Said thermal management system 100 comprises a cooling circuit 102 configured to circulate a two-phase cooling fluid, such as for example R134a or R1233zd, and to which a compressor 104 for compressing the cooling fluid in its vapor phase and a condenser unit 106 for condensing the compressed cooling fluid and outputting the cooling fluid in its liquid phase are provided.

Said cooling fluid in its liquid phase is then supplied to a cabin cooling unit 108 as well as a battery cooling unit 110, which are arranged in parallel in the cooling circuit 102. In the embodiment of Fig. 1, each of the cabin cooling unit 108 and the battery cooling unit 110 in turn comprises a controllable expansion valve 108a, 110a and an evaporator 108b, 110b. **It** shall be noted that the controllable expansion valves 108a, 110a as well as the compressor 104 are controlled by a control unit, which is omitted in Fig. 2 as well as Figs. 3A-3C described below.

While the cabin evaporator 108b in the embodiment shown in Fig. 2 directly cools the cabin 12 of the aircraft 10, the evaporator 110b of the battery cooling unit 110 is coupled to a secondary cooling circuit 112 to form a heat exchanger. In said secondary cooling circuit 112, a second cooling fluid, which may be different from the cooling fluid circulating in the cooling circuit 102, circulates and is for this purpose driven by a pump unit 114, which ensures that each of the battery modules 16 is adequately supplied with the second cooling fluid.

While thus the system shown in Fig. 2 relies on the evaporator 110b of the battery cooling unit to form part of a heat exchanger as well as on the secondary cooling circuit 112, the three systems shown in Figs. 3A-3C rely on evaporating the cooling fluid directly inside the individual battery modules 16. Therein, the three individual systems are denoted with the reference numerals 200, 300 and 400 and each comprise cooling circuits 202, 302, 402, compressors 204, 304, 404 as well as condensers 206, 306, 406 similar to the system shown in Fig. 2. The respective cabin cooling units 208, 308, 408 also correspond to the cabin cooling unit 108 shown in the embodiment of Fig. 2, each comprising controllable expansion valves 208a, 308a, 408a as well as evaporators 208b, 308b, 408b.

Thus, the differences between the three systems shown in Figs. 3A-3C merely relate to the design of the battery cooling units 210, 310 and 410. In the system shown in Fig. 3A, a single controllable expansion valve 210a is provided, which is associated with all of the battery modules 16. This design requires both an additional liquid vapor separator 212 upstream of the compressor 204 and an according control strategy for the cabin cooling unit 208, such that the overheating of the cooling fluid circulating through the evaporator 208b of the cabin cooling unit is controlled in such a manner that in the liquid-vapor separator 212 the liquid cooling unit evaporates to a sufficient degree in order to be able to supply it to the compressor 204 for further circulation in the cooling circuit 202.

In contrast, in the system shown in Fig. 3B, each of the battery modules 16 is individually provided with a separate controllable expansion valve 310a, such that the flow of cooling fluid to each of the battery modules 16 may be separately controlled. While this particular design allows for a highly granular heat dissipation from each of the battery modules 16, in particular according to temperature data provided for each battery module 16 individually by suitable temperature sensors which are not shown in Fig. 3B, care has to be taken that in each battery module 16 the cooling fluid is fully evaporated.

Lastly, Fig. 3C shows an embodiment of the present invention, in which in the battery cooling unit 410 again a single expansion valve 410a is provided. In said battery cooling unit 410, an additional liquid-vapor separator 412 as well as a pump unit 414 is provided, such that the liquid-vapor separator 412 serves as a reservoir for cooling fluid which will again be evaporated directly inside the individual battery modules 16, while the expansion valve 410 is controlled in such a manner that the liquid level inside the liquid-vapor separator 412 is kept substantially constant during operation.

## Claims

1. Thermal management system (400) for an aircraft (10) with a cabin (14), the system comprising
a battery assembly comprising a plurality of battery modules (16), the system (400) further comprising:
- a cooling circuit (402) configured to circulate a two-phase cooling fluid, the cooling circuit comprising:
∘ a compressor (404) for compressing the cooling fluid in its vapor phase;
∘ a condenser unit (406) for condensing the compressed cooling fluid and outputting the cooling fluid in its liquid phase;
∘ a cabin cooling unit (408) with a controllable expansion valve (408a) and configured to cool the cabin (14); and
∘ a battery cooling unit (410) provided with a single controllable expansion valve (410a) and configured to cool the plurality of battery modules (16);
- a plurality of temperature sensors;
- a control unit for controlling operation of the compressor (404) and the controllable expansion valves (408a, 410a);
wherein each of the cabin cooling unit (408) and the battery cooling unit (410) are configured to evaporate the liquid cooling fluid,
wherein the battery cooling unit (410) is integrated with the battery assembly in such a manner that the evaporation of the liquid cooling fluid takes place inside the battery modules (16),
**characterized in that** downstream of the single controllable expansion valve (410a) of the battery cooling unit (410) a liquid-vapor separator unit (412) is provided,
wherein the liquid-vapor separator unit (412) is arranged such that cooling fluid in vapor phase is directed to the compressor (404) while cooling fluid in liquid phase is directed to the battery assembly by means of a pump unit (414).

2. Thermal management system according to claim 1, wherein the plurality of temperature sensors comprises at least one temperature sensor unit configured to measure a temperature of the cabin (14) or the battery assembly, wherein preferably each battery module (16) is provided with a separate temperature sensor unit.

3. Thermal management system according to any of the preceding claims, further comprising a heat exchanger to recover the heat produced in the condenser unit.

4. Aircraft (10), comprising a fuselage (12) with a cabin (14), a battery assembly comprising a plurality of battery modules (16) and a thermal management system (20) according to any of the preceding claims.

5. Aircraft according to claim 4,
wherein the aircraft further comprises at least one additional component to be cooled by the thermal management system (20), in particular at least one electrical propulsion engine.

## Patentansprüche

1. Wärmeverwaltungssystem (400) für ein Flugzeug (10) mit einer Kabine (14), wobei das System eine Batteriebaugruppe umfasst, die eine Vielzahl von Batteriemodulen (16) umfasst, wobei das System (400) ferner Folgendes umfasst:
- einen Kühlkreislauf (402), der dazu konfiguriert ist, ein zweiphasiges Kühlfluid zu zirkulieren, wobei der Kühlkreislauf Folgendes umfasst:
∘ einen Verdichter (404) zum Verdichten des Kühlfluids in seiner Dampfphase;
∘ eine Kondensatoreinheit (406) zum Kondensieren des verdichteten Kühlfluids und Ausgeben des Kühlfluids in seiner flüssigen Phase;
∘ eine Kabinenkühleinheit (408) mit einem steuerbaren Expansionsventil (408a) und dazu konfiguriert, die Kabine (14) zu kühlen; und
∘ eine Batteriekühleinheit (410), die mit einem einzelnen steuerbaren Expansionsventil (410a) bereitgestellt und dazu konfiguriert ist, die Vielzahl von Batteriemodulen (16) zu kühlen;
- eine Vielzahl von Temperatursensoren;
- eine Steuereinheit zum Steuern von Betrieb des Verdichters (404) und der steuerbaren Expansionsventile (408a, 410a);
wobei jede von der Kabinenkühleinheit (408) und der Batteriekühleinheit (410) dazu konfiguriert ist, das flüssige Kühlfluid zu verdampfen,
wobei die Batteriekühleinheit (410) in die Batteriebaugruppe auf eine solche Weise integriert ist, dass die Verdampfung des flüssigen Kühlfluids innerhalb der Batteriemodule (16) stattfindet,
**dadurch gekennzeichnet, dass** stromabwärts des einzelnen steuerbaren Expansionsventils (410a) der Batteriekühleinheit (410) eine Flüssig-Dampf-Abscheideeinheit (412) bereitgestellt ist,
wobei die Flüssig-Dampf-Abscheideeinheit (412) angeordnet ist, sodass Kühlfluid in Dampfphase zu dem Verdichter (404) geleitet wird, während Kühlfluid in Flüssigphase zu der Batteriebaugruppe geleitet mittels einer Pumpeneinheit (414) wird.

2. Wärmeverwaltungssystem nach Anspruch 1,
wobei die Vielzahl von Temperatursensoren zumindest eine Temperatursensoreinheit umfasst, die dazu konfiguriert ist, eine Temperatur der Kabine (14) oder der Batteriebaugruppe zu messen, wobei bevorzugt jedes Batteriemodul (16) mit einer separaten Temperatursensoreinheit bereitgestellt ist.

3. Wärmeverwaltungssystem nach einem der vorhergehenden Ansprüche, ferner umfassend einen Wärmetauscher, um die Wärme, die in der Kondensatoreinheit produziert wird, zurückzugewinnen.

4. Flugzeug (10), umfassend einen Rumpf (12) mit einer Kabine (14), eine Batteriebaugruppe, die eine Vielzahl von Batteriemodulen (16) umfasst, und ein Wärmeverwaltungssystem (20) nach einem der vorhergehenden Ansprüche.

5. Flugzeug nach Anspruch 4,
wobei das Flugzeug ferner zumindest eine zusätzliche Komponente umfasst, die durch das Wärmeverwaltungssystem (20) zu kühlen ist, insbesondere zumindest ein elektrisches Antriebstriebwerk.

## Revendications

1. Système de gestion thermique (400) pour un aéronef (10) avec une cabine (14), le système comprenant un ensemble batterie comprenant une pluralité de modules de batterie (16), le système (400) comprenant en outre :
- un circuit de refroidissement (402) conçu pour faire circuler un fluide de refroidissement à deux phases, le circuit de refroidissement comprenant :
∘ un compresseur (404) pour comprimer le fluide de refroidissement dans sa phase vapeur ;
∘ une unité de condenseur (406) pour condenser le fluide de refroidissement comprimé et délivrer en sortie le fluide de refroidissement dans sa phase liquide ;
∘ une unité de refroidissement de cabine (408) avec une vanne de détente pouvant être commandée (408a) et conçue pour refroidir la cabine (14) ; et
∘ une unité de refroidissement de batterie (410) dotée d'une seule vanne de détente pouvant être commandée (410a) et conçue pour refroidir la pluralité de modules de batterie (16) ;
- une pluralité de capteurs de température ;
- une unité de commande pour commander un fonctionnement du compresseur (404) et des vannes de détente pouvant être commandées (408a, 410a) ;
dans lequel chacune de l'unité de refroidissement de cabine (408) et de l'unité de refroidissement de batterie (410) est conçue pour évaporer le fluide de refroidissement liquide,
dans lequel l'unité de refroidissement de batterie (410) est intégrée à l'ensemble batterie de manière à ce que l'évaporation du fluide de refroidissement liquide aie lieu à l'intérieur des modules de batterie (16),
**caractérisé en ce qu'**en aval de la seule vanne de détente pouvant être commandée (410a) de l'unité de refroidissement de batterie (410), une unité de séparation liquide-vapeur (412) est ménagée,
dans lequel l'unité de séparation liquide-vapeur (412) est agencée de sorte que du fluide de refroidissement en phase vapeur est dirigé vers le compresseur (404) tandis que du fluide de refroidissement en phase liquide est dirigé vers l'ensemble batterie au moyen d'une unité de pompe (414).

2. Système de gestion thermique selon la revendication 1,
dans lequel la pluralité de capteurs de température comprend au moins une unité de capteur de température conçue pour mesurer une température de la cabine (14) ou de l'ensemble batterie, dans lequel de préférence chaque module de batterie (16) est doté d'une unité de capteur de température séparée.

3. Système de gestion thermique selon l'une quelconque des revendications précédentes, comprenant en outre un échangeur de chaleur pour récupérer la chaleur produite dans l'unité de condenseur.

4. Aéronef (10), comprenant un fuselage (12) avec une cabine (14), un ensemble batterie comprenant une pluralité de modules de batterie (16) et un système de gestion thermique (20) selon l'une quelconque des revendications précédentes.

5. Aéronef selon la revendication 4,
dans lequel l'aéronef comprend en outre au moins un composant supplémentaire à refroidir par le système de gestion thermique (20), en particulier au moins un moteur de propulsion électrique.
